# EUROPEAN PATENT APPLICATION

(11) **EP 4 571 262 A1**
(43) Date of publication of application: **18.06.2025**
(21) Application number: 23852911.9
(22) Date of filing: 07.08.2023
(51) Int. Cl.: G01D 5/14, G01L 3/10, B62D 6/10, G01D 11/24, B62D 15/02

(54) **SENSOR DEVICE**

(30) Priority: 08.08.2022 KR 20220098387; 19.09.2022 KR 20220117720; 06.12.2022 KR 20220168710
(71) Applicant: LG INNOTEK CO. LTD, Gangseo-gu Seoul 07796 (KR)
(72) Inventor: LEE, Chang Hwan, Seoul 07796 (KR); BYUN, Sung Wook, Seoul 07796 (KR)
(74) Representative: Plasseraud IP
(86) International application number: PCT/KR2023/011572
(87) International publication number: WO 2024/035032

(57) **Abstract**

An embodiment may provide a sensor device including a rotor, a stator disposed to correspond to the rotor, a first shield and a second shield each disposed at one side of the stator, a first collector and a second collector disposed between the first shield and the second shield, and a Hall sensor disposed between the first collector and the second collector, wherein the first shield is disposed apart from the first collector and the second collector, and the second shield is disposed apart from the first collector and the second collector.

## Description

### [Technical Field]

The present invention relates to a sensor device.

### [Background Art]

In an electronic power system (EPS), an electronic control unit drives a motor according to a running condition to secure turning stability and rapidly provide a restoring force so that a driver can travel safely.

An EPS includes a sensor device which measures a torque and a steering angle of a steering shaft and the like to provide a proper torque. The sensor device measures a torsion degree of a torsion bar. The torsion bar is a member which connects the steering shaft to an input shaft connected to a handle and an output shaft connected to a power transmission component and connects the input shaft to the output shaft.

A sensor device includes a housing, a rotor, a stator including stator teeth, and a collector. In this case, the collector is disposed outside the stator teeth. Accordingly, when an external magnetic field is generated, the collector serves as a path of the external magnetic field, and thus there is a problem of affecting a magnetic flux value of a sensor. When the sensor is affected as described above, an output value of the sensor device changes, and thus a problem that a torsion degree of a torsion bar cannot be accurately measured occurs.

### [Detailed Description of Invention]

### [Technical Problem]

The present invention is directed to providing a sensor device capable of preventing a sensor from being affected by external magnetism.

### [Technical Solution]

One aspect of the present invention provides a sensor device including a rotor, a stator disposed to correspond to the rotor, a first shield and a second shield each disposed at one side of the stator, a first collector and a second collector disposed between the first shield and the second shield, and a Hall sensor disposed between the first collector and the second collector, wherein the first shield is disposed apart from the first collector and the second collector, and the second shield is disposed apart from the first collector and the second collector.

The first shield may include a first region located at a first side of the stator in an axial direction, a second region disposed at a second side of the stator, and a third region which connects the first region and the second region, and the second shield may include a fourth region located at the second side of the stator in the axial direction, a fifth region located at the first side of the stator, and a sixth region which connects the fourth region and the fifth region.

The second region may be disposed to overlap the stator in the axial direction, and the fourth region may be disposed to overlap the stator in the axial direction.

The first shield may include a first bent portion bent from an end portion of the first region toward the second shield, and the second shield may include a second bent portion bent from an end portion of the second region toward the first shield.

The first collector may include a first body, a first leg bent from the first body toward the Hall sensor, and a first extension disposed on the first body to overlap the stator in an axial direction, wherein a shape of the first extension overlapping the stator in the axial direction may be disposed to correspond to a shape of the fifth region, and a size of the fifth region may be greater than a size of the first extension to cover the first extension in the axial direction.

The first region may be disposed to overlap the first body and the first leg in the axial direction.

The second collector may include a second body, a second leg bent from the second body toward the Hall sensor, a second extension disposed on the second body to overlap the stator in the axial direction, a shape of the fourth region may be disposed to correspond to a shape of the second extension, and a size of the second region may be greater than a size of the first extension to completely cover the first extension in the axial direction.

The fourth region may be disposed to overlap the first body and the first leg in the axial direction.

Each of the third region and the sixth region may include a plurality of bent regions, and bent directions of at least three of the plurality of bent regions may be different from each other.

The sensor device may further include a housing disposed outside the stator, the third region may include a first surface in contact with an upper surface of the housing, a second surface in contact with a lower surface of the housing, and a third surface which connects the first surface and the second surface and is in contact with a side surface of the housing, and the sixth region may include a fourth surface in contact with the upper surface of the housing, a fifth surface in contact with the lower surface of the housing, and a sixth surface which connects the third surface and the fourth surface and is in contact with the side surface of the housing.

### [Advantageous Effects]

In an embodiment, a shield spaced apart from a collector prevents an external magnetic field from flowing toward the collector, allows the external magnetic field to flow to the outside, and prevents a sensor from being affected by the external magnetic field.

### [Description of Drawings]

FIG. 1 is a perspective view illustrating a sensor device according to an embodiment;
FIG. 2 is a perspective view illustrating an inner portion of the sensor device illustrated in FIG. 1;
FIG. 3 is a perspective view illustrating a first shield and a second shield of the sensor device illustrated in FIG. 1;
FIG. 4 is a view illustrating a state before the first shield, the second shield, a first collector, and a second collector are assembled;
FIG. 5 is a side view illustrating a state in which the first shield, the second shield, the first collector, and the second collector are assembled;
FIG. 6 is a perspective view illustrating the first shield;
FIG. 7 is a perspective view illustrating the second shield;
FIG. 8 is a perspective view illustrating the first collector;
FIG. 9 is a perspective view illustrating the second collector;
FIG. 10 is a side cross-sectional view illustrating one side of the sensor device illustrated in FIG. 1;
FIG. 11 is a side cross-sectional view illustrating the other side of the sensor device illustrated in FIG. 1;
FIG. 12 is a view illustrating a flow of a magnetic field when there is no external magnetic field;
FIG. 13 is a view illustrating a flow of a magnetic field when there is an external magnetic field in an axial direction;
FIG. 14 is a view illustrating a flow of a magnetic field when there is an external magnetic field in a radial direction;
FIG. 15 is a perspective view illustrating a first shield of a motor according to another embodiment of the present invention;
FIG. 16 is a plan view illustrating the first shield illustrated in FIG. 15;
FIG. 17 is a side view illustrating the first shield illustrated in FIG. 15;
FIG. 18 is a perspective view illustrating a second shield;
FIG. 19 is a plan view illustrating the second shield illustrated in FIG. 18;
FIG. 20 is a side view illustrating the second shield illustrated in FIG. 18;
FIG. 21 is a view illustrating a flow of a magnetic field around the first shield of FIG. 15 and the second shield of FIG. 18 when there is an external magnetic field in a lateral direction;
FIG. 22 is a perspective view illustrating a housing;
FIG. 23 is a front perspective view illustrating a first housing illustrated in FIG. 22;
FIG. 24 is a rear perspective view illustrating the first housing illustrated in FIG. 22;
FIG. 25 is a front view illustrating the sensing device illustrated in FIG. 1;
FIG. 26 is a plan view illustrating the sensing device illustrated in FIG. 1;
FIG. 27 is a side view illustrating the sensing device illustrated in FIG. 1; and
FIG. 28 is an enlarged view illustrating an inner portion of a cover of the housing.

### [Modes of the Invention]

Hereinafter, a direction perpendicular to an axial direction of a sensor device is a radial direction, and a direction along a circle having a radius from an axial center in the radial direction is referred to as a circumferential direction.

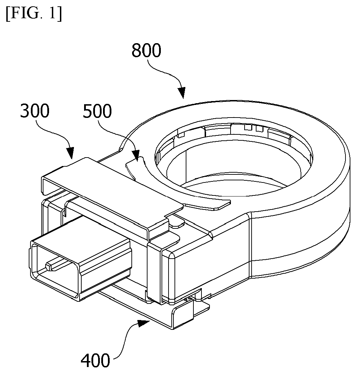

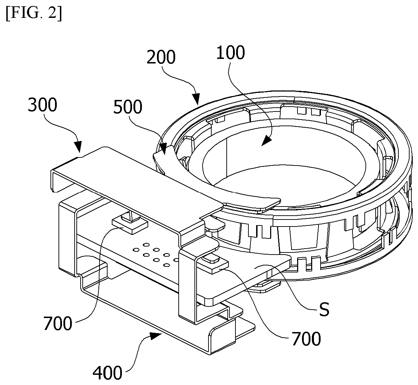

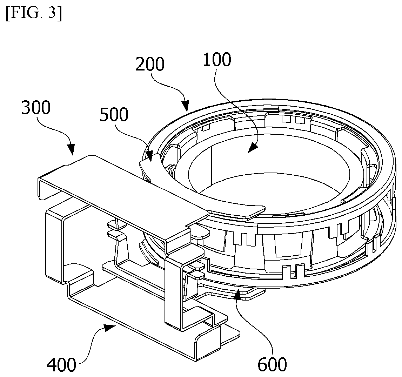

FIG. 1 is a perspective view illustrating a sensor device according to an embodiment, FIG. 2 is a perspective view illustrating an inner portion of the sensor device illustrated in FIG. 1, and FIG. 3 is a perspective view illustrating a first shield and a second shield of the sensor device illustrated in FIG. 1.

Referring to FIGS. 1 to 3, the sensor device according to the embodiment may include a rotor 100, a stator 200, a first shield 300, a second shield 400, a first collector 500, a second collector 600, and a Hall sensor 700. In the drawings, an x-axis indicates a direction perpendicular to the axial direction, a y-axis indicates a direction perpendicular to the axial direction and perpendicular to the direction indicated by the x-axis, and a z-axis indicates the axial direction.

In this case, the stator 200 may be connected to an output shaft (not shown), and the rotor 100, of which at least a portion is rotatably disposed in the stator 200, may be connected to an input shaft (not shown), but the present invention is not limited thereto. In this case, the rotor 100 may be disposed to be rotatable with respect to the stator 200. Hereinafter, the term "inward" refers to a direction toward a center in the radial direction, and the term "outward" refers to a direction opposite to "inward."

In the sensor device according to the embodiment, the first shield 300 and the second shield 400 prevent the Hall sensor 700 from being affected by an external magnetic field by inducing the external magnetic field to exit without flowing toward the first collector 500 or the second collector 600 in an environment in which the external magnetic field acts.

The rotor 100 may include a magnet. The magnet may be disposed inside the stator 200. The magnet may be connected to the input shaft through a separate holder.

A housing 10 is disposed outside the stator 200. The housing 80 may include an upper housing 11 and a lower housing 12. The stator 200, the first shield 300, the second shield 400, the first collector 500, and the second collector 600 may be fixed to the housing 80.

The first shield 300 may be disposed to cross from a first side toward a second side of the stator 200 in the axial direction. The second shield 400 may be disposed to cross from the second side toward the first side of the stator 200 in the axial direction. The first side is one side of the stator 200 in the axial direction, and the second side is the other side of the stator 200 in the axial direction.

The first collector 500 and the second collector 600 are disposed to correspond to the Hall sensor 700.

A substrate S may be disposed between the first collector 500 and the second collector 600.

The Hall sensor 700 is disposed on the substrate S. The Hall sensor 700 is disposed between the first collector 500 and the second collector 600 and detects a change in magnetic field occurring between the stator 200 and the rotor 100. The Hall sensor 700 may be a Hall integrated circuit (IC). The sensor device measures a torque on the basis of the detected change in magnetic field.

Only locations of the first shield 300 and the second shield 400 are different, and shapes and sizes thereof may be the same. Only locations of the first collector 500 and the second collector 600 are different, and shapes and sizes thereof may be the same.

Based on the axial direction, each of the first collector 500 and the second collector 600 is located between the first shield 300 and the second shield 400. Accordingly, the first collector 500 and the second collector 600 may be protected from an external magnetic field by the first shield 300 and the second shield 400.

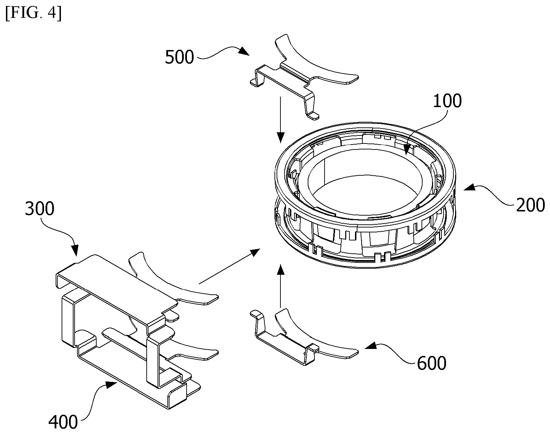

FIG. 4 is a view illustrating a state before the first shield 300, the second shield 400, the first collector 500, and the second collector 600 are assembled.

Referring to FIGS. 1 and 4, the first collector 500 is assembled to one side of the stator 200 in the axial direction. The second collector 600 is assembled to the other side of the stator 200 in the axial direction. The first shield 300 and the second shield 400 may be assembled to an outer side of the stator 200 in the radial direction. First, after the first collector 500 and the second collector 600 are assembled in the housing 800, the first shield 300 and the second shield 400 may enter the housing 800 in the radial direction and may be assembled in the housing 800.

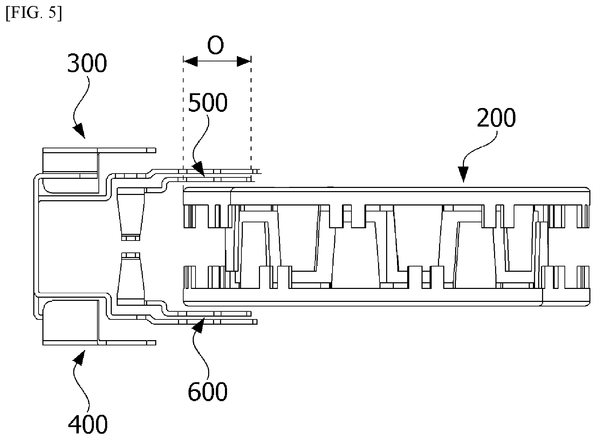

FIG. 5 is a side view illustrating a state in which the first shield 300, the second shield 400, the first collector 500, and the second collector 600 are assembled.

Referring to FIG. 5, the first shield 300 is disposed apart from the first collector 500 and the second collector 600. The second shield 400 is also disposed apart from the first collector 500 and the second collector 600. This is to prevent an external magnetic field from flowing toward the first collector 500 and the second collector 600 through the first shield 300 or the second shield 400.

An inner end portion of the first shield 300 is disposed to overlap the stator 200 to form an overlap region in the axial direction. An inner end portion of the second shield 400 is also disposed to overlap the stator 200 in the axial direction.

Based on the axial direction, the first collector 500 and the second collector 600 are disposed between the first shield 300 and the second shield 400.

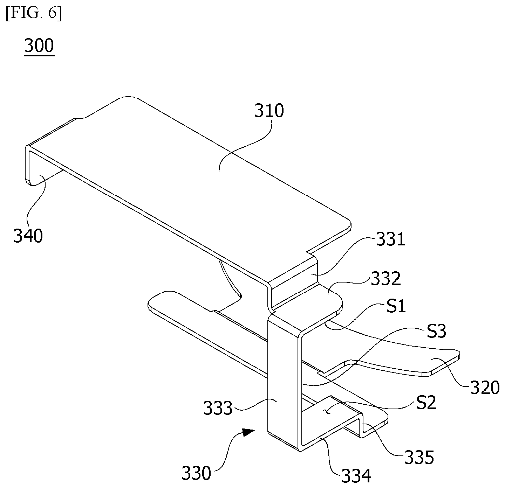

FIG. 6 is a perspective view illustrating the first shield 300.

Referring to FIG. 6, the first shield 300 includes a first region 310, a second region 320, a third region 330, and a first bent portion 340. The first region 310, the second region 320, the third region 330, and the first bent portion 340 are described as separate but may be one connected member.

The first region 310 is located at the first side of the stator 200. The first region 310 may be disposed along a plane perpendicular to the axial direction. As a size of the first region 310 is increased, the influence of an external magnetic field may be reduced.

The second region 320 is located at the second side of the stator 200. The second region 320 may be disposed along a plane perpendicular to the axial direction. An inner edge of the second region 320 has a curved surface.

The third region 330 connects the first region 310 and the second region 320. The third region 330 may include a plurality of bent regions. Bending directions of at least three of the plurality of bent regions of the third region 330 may be different from each other.

For example, the third region 330 may include a first part 331 vertically bent downward from one side of the first region 310 and a second part 332 perpendicularly bent from the first part 331. In addition, the third region 330 may include a third part 333 vertically bent down from the second part 332, a fourth part 334 disposed to be perpendicularly bent from the third part 333 and face the second part 332, and a fifth part 335 vertically bent from the fourth part 334 and connected to the second region 320.

The second part 332 forms a first surface S1 in contact with the housing 800. The fourth part 334 forms a second surface S2 in contact with the housing 800. In addition, the third part 333 forms a third surface S3 which is in contact with the housing 800 and is connected to the first surface S1 and the second surface S2.

The first bent portion 340 is bent downward from the other side of the first region 310. As a size of the first bent portion 340 is increased, the influence of an external magnetic field may be reduced.

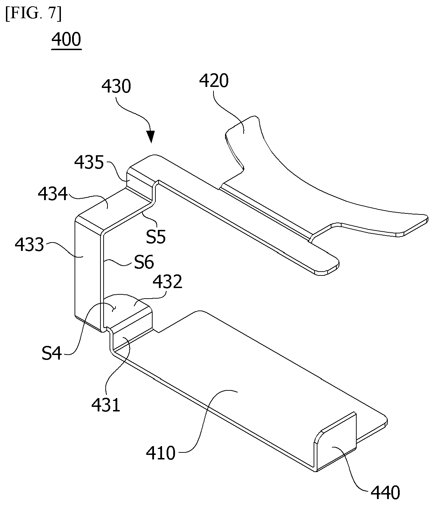

FIG. 7 is a perspective view illustrating the second shield 400.

Referring to FIG. 7, the second shield 400 includes a fourth region 410, a fifth region 420, a sixth region 630, and a second bent portion 440. The fourth region 410, the fifth region 420, the sixth region 430, and the second bent portion 440 are described as separate but may be one connected member.

The fourth region 410 is located at the second side of the stator 200. The fourth region 410 may be disposed along a plane perpendicular to the axial direction. As a size of the fourth region 410 is increased, the influence of an external magnetic field may be reduced.

The fifth region 420 is located at the first side of the stator 200. The fifth region 420 may also be disposed along a plane perpendicular to the axial direction. An inner edge of the fifth region 420 has a curved surface.

The sixth region 430 connects the fourth region 410 and the fifth region 420. The sixth region 430 may include a plurality of bent regions. Bending directions of at least three of the plurality of bent regions of the sixth region 430 may be different from each other.

For example, the sixth region 430 may include a sixth part 431 vertically bent downward from the other side of the fourth region 410 and a seventh part 432 perpendicularly bent from the sixth part 431. In addition, the sixth region 430 may include an eighth part 433 vertically bent downward from the seventh part 432, a ninth part 434 disposed to be perpendicularly bent from the eighth part 433 and face the seventh part 432, and a tenth part 435 vertically bent downward from the ninth part 434 and connected to the fifth region 420.

The seventh part 432 forms a fourth surface S4 in contact with the housing 800. The ninth part 434 forms a fifth surface S5 in contact with the housing 800. In addition, the eighth part 433 forms a sixth surface S6 which is in contact with the housing 800 and is connected to the fourth surface S4 and the fifth surface S5.

The second bent portion 440 is bent upward from one side of the fourth region 410. As a size of the second bent portion 440 is increased, the influence of an external magnetic field may be reduced.

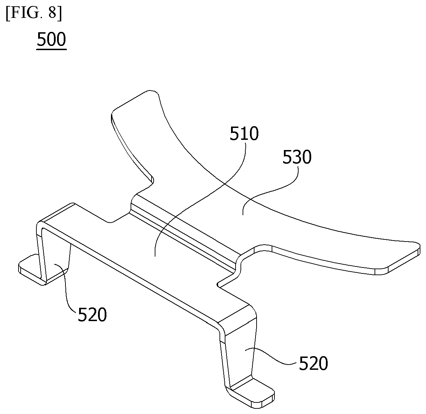

FIG. 8 is a perspective view illustrating the first collector 500.

Referring to FIG. 8, the first collector 500 may include a first body 510, first legs 520, and a first extension 530. The first legs 520 are disposed to be bent downward from both sides of the first body 510 to face the Hall sensor 700. The first extension 530 extends to the inside of the first body 510. The first extension 530 is disposed to overlap the stator 200 in the axial direction. An inner edge of the first extension 530 is formed in a curved surface.

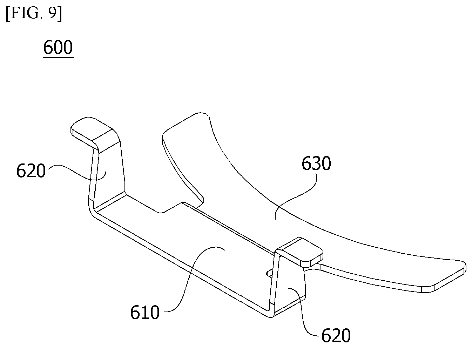

FIG. 9 is a perspective view illustrating the second collector 600.

Referring to FIG. 9, the second collector 600 may include a second body 610, second legs 620, and a second extension 630. The second legs 620 are disposed to be bent downward from both sides of the second body 610 to face the Hall sensor 700. The second extension 630 extends to the inside of the second body 610. The second extension 630 is disposed to overlap the stator 200 in the axial direction. An inner edge of the second extension 630 is formed in a curved surface.

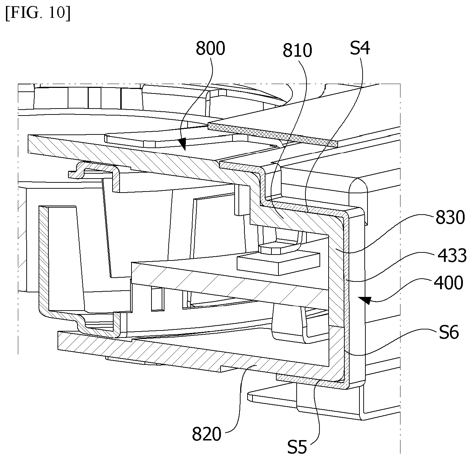

FIG. 10 is a side cross-sectional view illustrating one side of the sensor device illustrated in FIG. 1.

Referring to FIGS. 6 and 10, the first shield 300 is disposed outside the housing 800. In addition, the first shield 300 is in contact with an outer surface of the housing 800. The first surface S1 of the first shield 300 is in contact with an upper surface 810 of the housing 800. The second surface S2 of the first shield 300 is in contact with a lower surface 820 of the housing 800. In addition, the third surface S3 of the first shield 300 is in contact with a side surface 830 of the housing 800.

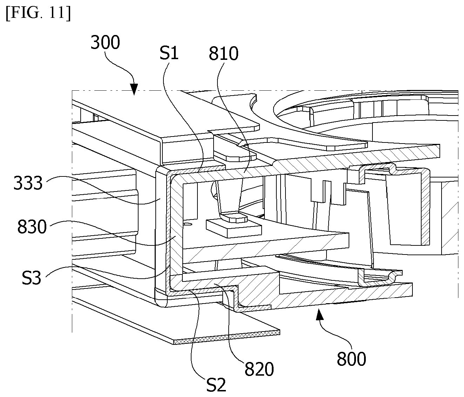

FIG. 11 is a side cross-sectional view illustrating the other side of the sensor device illustrated in FIG. 1.

Referring to FIGS. 7 and 11, the second shield 400 is disposed outside the housing 800. In addition, the second shield 400 is in contact with the outer surface of the housing 800. The fourth surface S4 of the second shield 400 is in contact with the upper surface 810 of the housing 800. The fifth surface S5 of the second shield 400 is in contact with the lower surface 820 of the housing 800. In addition, the sixth surface S6 of the second shield 400 is in contact with the side surface 830 of the housing 800.

As described above, as the first shield 300 and the second shield 400 are in contact with three surfaces of the housing 800, the first shield 300 and the second shield 400 may be stably fixed to the housing 800.

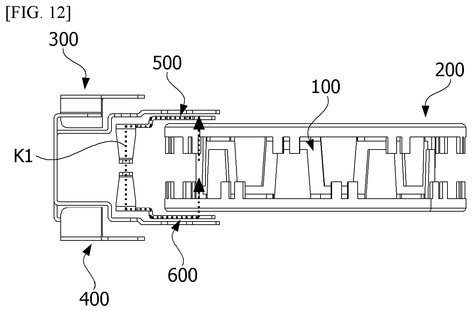

FIG. 12 is a view illustrating a flow of a magnetic field when there is no external magnetic field.

Referring to FIG. 12, when there is no external magnetic field, a flow of a magnetic field generated between the rotor 100 and the stator 200 is generated only between the first collector 500 and the second collector 600 like K1 of FIG. 12. The first collector 500 and the second collector 600 transmits a flow of magnetism generated between the rotor 100 and the stator 200 to the Hall sensor 700.

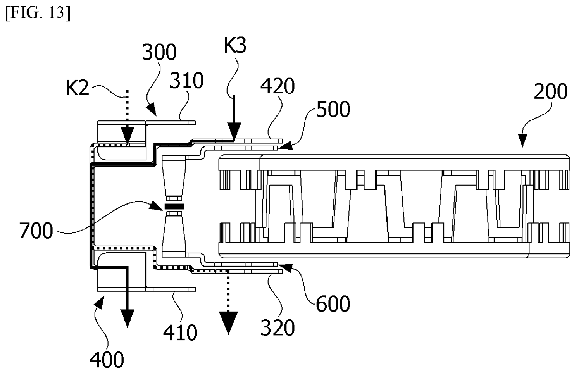

FIG. 13 is a view illustrating a flow of a magnetic field when there is an external magnetic field in the axial direction.

Referring to FIGS. 6 and 13, when there is an external magnetic field in the axial direction, like K2 illustrated in FIG. 13, the external magnetic field facing the first collector 500 and the second collector 600 from a location outside the stator 200 is introduced into the first region 310 of the first shield 300, is guided to the second region 320 without flowing toward the first collector 500 or the second collector 600, and exits to the outside.

The first region 310 of the first shield 300 covers the first collector 500, the sensor 700, and the second collector 600 in the axial direction. Specifically, the first region 310 is disposed to overlap the first body 510 and the second leg 520 of the collector 500 in the axial direction. In addition, the first shield 300 is spaced apart from the first collector 500. Accordingly, the external magnetic field may be blocked from flowing toward the first collector 500.

In addition, when there is an external magnetic field in the axial direction, like K3 illustrated in FIG. 13, the external magnetic field facing the stator 200 is introduced into the fifth region 420 of the second shield 400, is guided to the fourth region 410 without flowing toward the first collector 500 or the second collector 600, and exits to the outside.

Since the second region 320 is disposed to overlap the second extension 630 of the second collector 600 in the axial direction, the second region 320 is spaced apart from the second collector 600, the fourth region 410 is disposed to overlap the second body 610 and the second leg 620 in the axial direction, and the fourth region 410 is spaced apart from the second collector 600, even when the external magnetic field is generated downward and upward as in FIG. 13, the external magnetic field may be prevented from flowing toward the first collector 500 or the second collector 600.

Since the fifth region 420 completely covers the first collector 500 in the axial direction, and the first shield 300 is spaced apart from the first collector 500, the external magnetic field facing the stator 200 may be prevented from flowing toward the first collector 500.

In this case, the fifth region 420 is formed to have a size which is greater than that of the first extension 530 to completely cover the first extension 530 of the first collector 500 in the axial direction. In addition, a shape of the fifth region 420 may be formed to correspond to a shape of the first extension 530. Accordingly, the first shield 300 is disposed such that the first extension 530 is completely covered by the first region 310 in the axial direction.

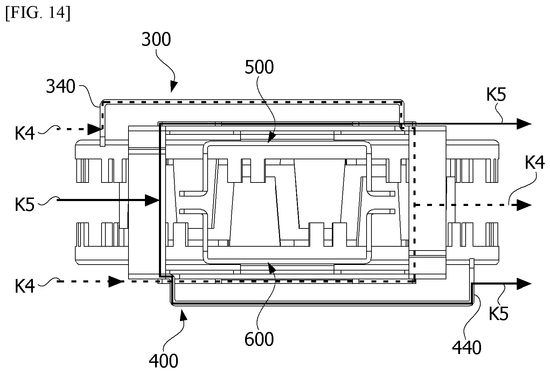

FIG. 14 is a view illustrating a flow of a magnetic field when there is an external magnetic field in the radial direction.

Referring to FIG. 14, when there is an external magnetic field in the radial direction, like K4 illustrated in FIG. 14, the external magnetic field facing the first collector 500 and the second collector 600 is introduced into the first bent portion 340 of the first shield 300 and is guided to exit to the outside without flowing toward the first collector 500 or the second collector 600.

In addition, another external magnetic field facing the first collector 500 and the second collector 600 is also introduced into the second shield 400, is guided to the second bent portion 440 without flowing toward the first collector 500 or the second collector 600, and exits to the outside.

Table 1 below is a comparison between offsets of sensing values according to external magnetic fields in a sensor device according to a comparative example and sensing values according to external magnetic fields in the sensor device according to an example.

In this case, in the example, the sensor device includes collectors individually disposed at a first side and a second side of a stator without separate additional shields. As shown in Table 1, in the case of an external magnetic field acting in directions perpendicular to an axial direction (a first direction x and a second direction y), it can be seen that the offsets of the sensing values of the comparative example and the offsets of the sensing values of the example are almost the same. However, in the case of an external magnetic field acting in the axial direction, the offset of the sensor device according to the example is at a very low level of 1/40 of the offset of the sensing value according to the comparative example, and thus it can be seen that the influence of the external magnetic field acting in the axial direction according to the example is relatively smaller than that according to the comparative example.

**[Table 1]**

| | | Comparative example | Example |
|---|---|---|---|
| Offset (deg) of sensing value corresponding to external magnetic field | First direction (x) | 0.00 deg | 0.01 deg |
| | Second direction (y) | 0.02 deg | 0.01 deg |
| | Axial direction (z) | 0.40 deg | 0.01 deg |

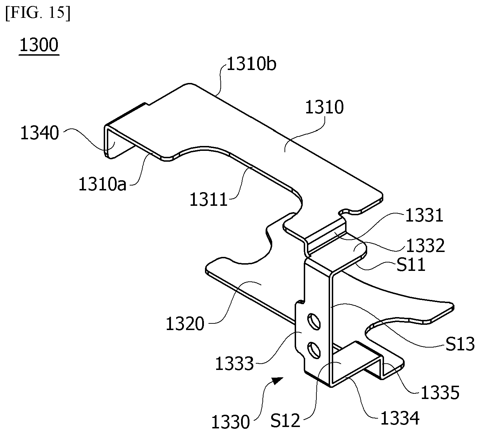

FIG. 15 is a perspective view illustrating a first shield 1300 of a motor according to another embodiment of the present invention.

Referring to FIG. 15, the first shield 1300 of the motor according to another embodiment of the present invention includes a first region 1310, a second region 1320, a third region 1330, and a first bent portion 1340. The first region 1310, the second region 1320, the third region 1330, and the first bent portion 1340 are described as separate but may be one connected member.

The first region 1310 is located at a first side of a stator 200. The first region 1310 may be disposed along a plane perpendicular to an axial direction. As a size of the first region 1310 is increased, the influence of an external magnetic field may be reduced.

The second region 1320 is located at a second side of the stator 200. The second region 1320 may also be disposed along a plane perpendicular to the axial direction. An inner edge of the second region 1320 has a curved surface.

The third region 1330 connects the first region 1310 and the second region 1320. The third region 1330 may include a plurality of bent regions. Bending directions of at least three of the plurality of bent regions of the third region 1330 may be different from each other.

For example, the third region 1330 may include a first part 1331 vertically bent downward from one side of the first region 1310 and a second part 1332 perpendicularly bent from the first part 1331. In addition, the third region 1330 may include a third part 1333 vertically bent downward from the second part 1332, a fourth part 1334 disposed to be perpendicularly bent from the third part 1333 and face the second part 1332, and a fifth part 1335 vertically bent downward from the fourth part 1334 and connected to the second region 1320.

The second part 1332 forms a first surface S11 in contact with a housing 800. The fourth part 1334 forms a second surface S12 in contact with the housing 800. In addition, the third part 1333 forms a third surface S13 which is in contact with the housing 800 and is connected to the first surface S11 and the second surface S12.

The first bent portion 1340 is bent downward from the other side of the first region 1310. As a size of the first bent portion 1340 increases, the influence of an external magnetic field may be reduced.

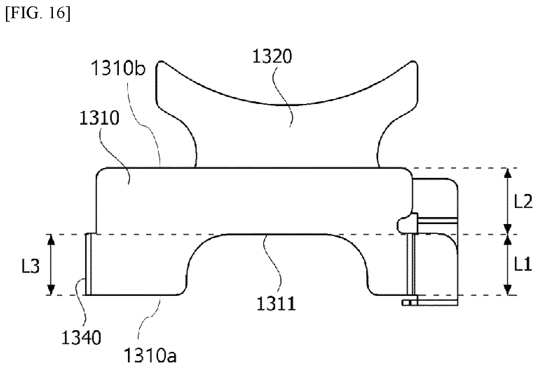

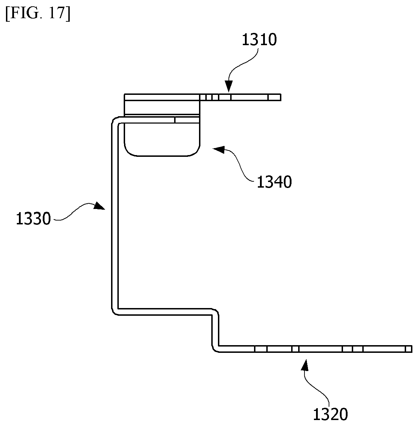

FIG. 16 is a plan view illustrating the first shield 1300 illustrated in FIG. 15, and FIG. 17 is a side view illustrating the first shield 1300 illustrated in FIG. 15.

Referring to FIGS. 15 to 17, the first region 1310 of the first shield 1300 may include a first groove 1311. The first region 1310 includes a first edge 1310a and a second edge 1310b which face each other. The first edge 1310a is disposed further away from the stator 200 than the second edge 1310b in a radial direction. The first groove 1311 may be formed to be concave from the first edge 1310a toward the second edge 1310b.

The first groove 1311 may be disposed to not overlap the second region 1320 in the axial direction.

A width L1 of the first groove 1311 may be smaller than a width L2 from the second edge 1310b of the first region 1310 to the first groove 1311 in a direction perpendicular to the axial direction. In addition, the width L1 of the first groove 1311 may be the same as a width L3 of the first bent portion 1340 in the direction perpendicular to the axial direction.

Meanwhile, the second region 1320 may be formed to be flat along a plane perpendicular to the axial direction without a step.

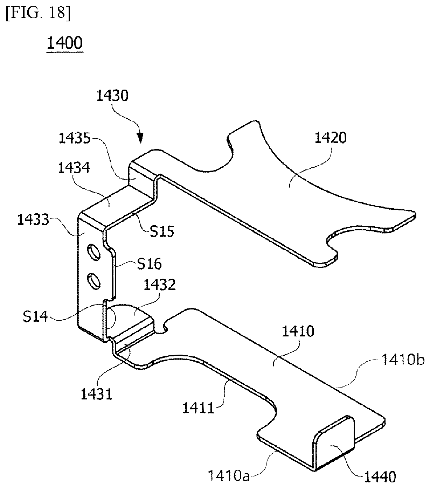

FIG. 18 is a perspective view illustrating a second shield 1400.

Referring to FIG. 7, the second shield 1400 includes a fourth region 1410, a fifth region 1420, a sixth region 1630, and a second bent portion 1440. The fourth region 1410, the fifth region 1420, the sixth region 1430, second bent portion 1440 are described as separate but may be one connected member.

The fourth region 1410 is located at the second side of the stator 200. The fourth region 1410 may be disposed along a plane perpendicular to the axial direction. As a size of the fourth region 1410 is increased, the influence of an external magnetic field may be reduced.

The fifth region 1420 is located at the first side of the stator 200. The fifth region 1420 may also be disposed along a plane perpendicular to the axial direction. An inner edge of the fifth region 1420 has a curved surface.

The sixth region 430 connects the fourth region 1410 and the fifth region 1420. The sixth region 430 may include a plurality of bent regions. Bending directions of at least three of the plurality of bent regions of the sixth region 1430 may be different from each other.

For example, the sixth region 1430 may include a sixth part 1431 vertically bent downward from the other side of the fourth region 1410 and a seventh part 1432 perpendicularly bent from the sixth part 1431. In addition, the sixth region 1430 may include an eighth part 1433 vertically bent downward from the seventh part 1432, a ninth part 1434 disposed to be perpendicularly bent from the eighth part 1433 and face the seventh part 1432, and a tenth part 1435 vertically bent downward from the ninth part 1434 and connected to the fifth region 1420.

The seventh part 1432 forms a fourth surface S14 in contact with the housing 800. The ninth part 1434 forms a fifth surface S15 in contact with the housing 800. In addition, the eighth part 1433 forms a sixth surface S16 which is in contact with the housing 800 and is connected to the fourth surface S14 and the fifth surface S15.

The second bent portion 1440 is bent upward from one side of the fourth region 1410. As a size of the second bent portion 1440 is increased, the influence of an external magnetic field may be reduced.

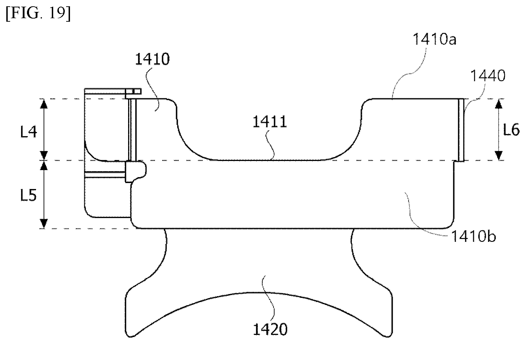

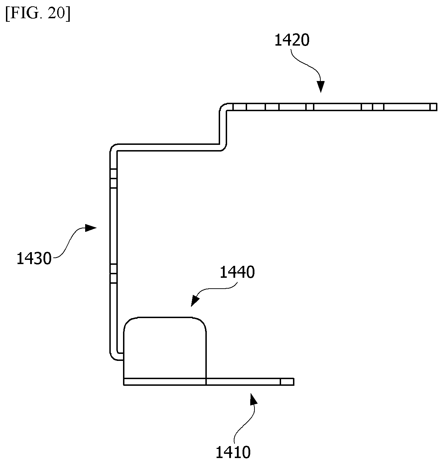

FIG. 19 is a plan view illustrating the second shield 1400 illustrated in FIG. 18, and FIG. 20 is a side view illustrating the second shield 1400 illustrated in FIG. 18.

Referring to FIGS. 18 to 20, the fourth region 1410 of the second shield 1400 may include a second groove 1411. The fourth region 1410 includes a third edge 1410a and a fourth edge 1410b which face each other. The third edge 1410a is disposed further away from the stator 200 than the fourth edge 1410b in the radial direction. The second groove 1411 may be formed to be concave from the third edge 1410a toward the fourth edge 1410b.

The second groove 1411 may be disposed to not overlap the fifth region 1420 in the axial direction.

A width L4 of the second groove 1411 may be smaller than a width L5 from the fourth edge 1410b of the fourth region 1410 to the second groove 1411 in the direction perpendicular to the axial direction. In addition, the width L4 of the second groove 1411 may be the same as a width L6 of the second bent portion 1440 in the direction perpendicular to the axial direction.

Meanwhile, the fourth region 1420 may be formed to be flat along a plane perpendicular to the axial direction without a step.

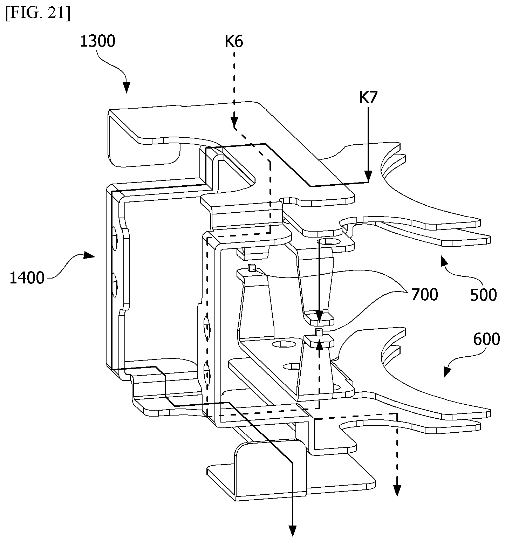

FIG. 21 is a view illustrating a flow of a magnetic field around the first shield 1300 of FIG. 15 and the second shield 1400 of FIG. 18 when there is an external magnetic field in a lateral direction.

Referring to FIGS. 15 to 21, when there is an external magnetic field in the axial direction, like K6 illustrated in FIG. 21, the external magnetic field facing a first collector 500 and a second collector 600 from a location outside the stator 200 is introduced into the first region 1310 of the first shield 1300, is guided to the second region 1320 without flowing toward the first collector 500 or the second collector 600, and exits to the outside.

The first region 1310 of the first shield 1300 covers the first collector 500, the sensor 700, and the second collector 600 in the axial direction. In addition, the first shield 1300 is spaced apart from the first collector 500. Accordingly, the external magnetic field may be prevented from flowing toward the first collector 500.

In addition, when there is an external magnetic field in the axial direction, like K7 illustrated in FIG. 21, the external magnetic field facing the stator 200 is introduced into the fifth region 1420 of the second shield 1400, is guided to the fourth region 410 without flowing toward the first collector 500 or the second collector 600, and exits to the outside.

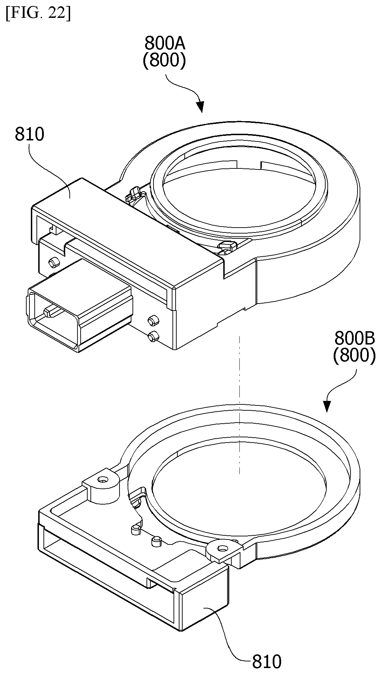

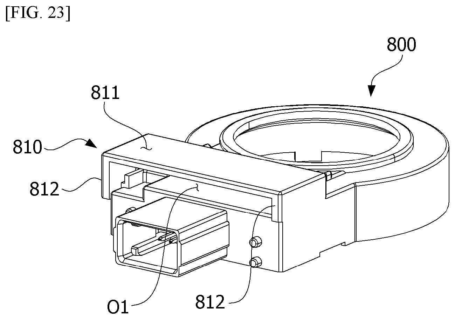

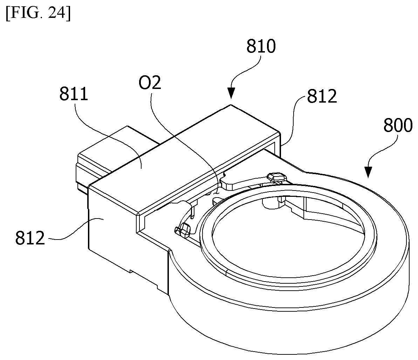

FIG. 22 is a perspective view illustrating the housing 800, FIG. 23 is a front perspective view illustrating a first housing 800A illustrated in FIG. 22, and FIG. 24 is a rear perspective view illustrating the first housing 800A illustrated in FIG. 22.

Referring to FIGS. 1 and 22, the housing 800 may be divided into the first housing 800A and a second housing 800B which are coupled to each other in the axial direction. The first shield 300 is assembled to the first housing 800A, and the second shield 400 is assembled to the second housing 800B.

A cover 810 may be disposed on each of the first housing 800A and the second housing 800B. The cover 810 may be disposed to protrude from the first housing 800A in the axial direction. In addition, the cover 810 may be disposed to protrude from the second housing 800B in the axial direction.

Since a shape and a function of the cover 810 of the first housing 800A are the same as those of the cover 810 of the second housing 800B, hereinafter, it will be described based on the cover 810 of the first housing 800A.

As illustrated in FIGS. 23 and 24, the cover 810 may include a body 811 and side walls 812.

The body 811 is disposed in a direction perpendicular to the axial direction. The body 811 may have a plate shape. For example, the body 811 may have a quadrangular plate shape.

The side walls 812 may be disposed on both side surfaces of the body 811. The side wall 812 may extend on the both side surfaces of the body 811 in the axial direction. Two side walls 812 may be disposed to face each other. The body 811 is located on end portions of the side walls 812 in the axial direction.

The cover 810 includes one side opening O1 and another side opening O2. Two side walls 812, the body 811, and the outer surface of the housing 800 form the one side opening O1 and the other side opening O2. The cover 810 forms a space in which the first shield 300 or the second shield 400 is located.

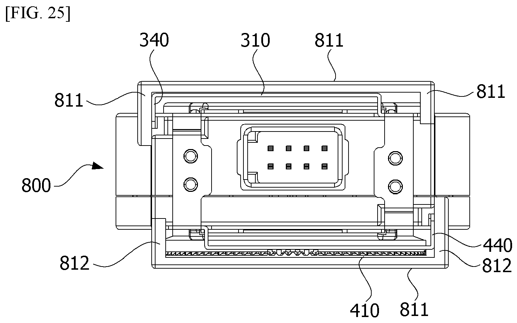

FIG. 25 is a front view illustrating the sensing device illustrated in FIG. 1.

Referring to FIG. 25, the cover 810 is disposed outside the first shield 300. In addition, the cover 810 is disposed outside the second shield 400. The cover 810 is disposed to overlap the first shield 300 in the axial direction. In addition, the cover 810 is disposed to overlap the second shield 400 in the axial direction.

Specifically, the body 811 of the cover 810 may be disposed to overlap the first region 310 of the first shield 300 in the axial direction. In addition, the body 811 of the cover 810 may be disposed to overlap the fourth region 410 of the second shield 400 in the axial direction.

Based on the axial direction, the body 811 is disposed apart from the outer surface of the housing 800. The first region 310 is disposed apart from the outer surface of the housing 800 and located between the body 811 and the outer surface of the housing 800. In addition, the fourth region 410 is disposed apart from the outer surface of the housing 800 and located between the body 811 and the outer surface of the housing 800.

The side walls 812 of the cover 810 are disposed to overlap the first bent portion 340 of the first shield 300 in the direction perpendicular to the axial direction. In addition, the side walls 812 of the cover 810 may be disposed to overlap the second bent portion 440 of the second shield 400 in the direction perpendicular to the axial direction.

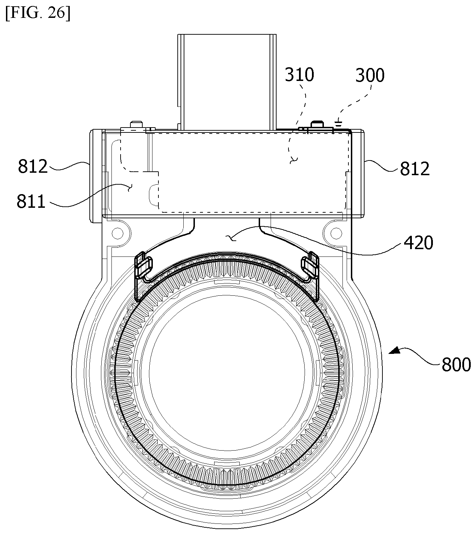

FIG. 26 is a plan view illustrating the sensing device illustrated in FIG. 1.

Referring to FIG. 26, the first shield 300 is completely covered by the body 811 of the cover 810 in the axial direction. The cover 810 is disposed to not overlap the stator 200, and the fifth region 420 of the second shield 400 is exposed without being covered by the cover 810. A size of the body 811 may be formed to be greater than a size of the first region 310 such that the body 811 may completely cover the first region 310 of the first shield 300 in the axial direction.

Although not illustrated in the drawing, the second shield 400 is also completely covered by the body 811 of the cover 810 like the first shield 300.

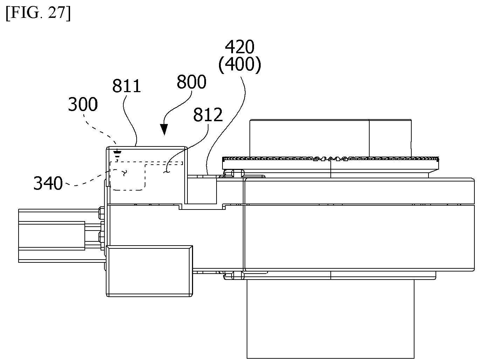

FIG. 27 is a side view illustrating the sensing device illustrated in FIG. 1.

Referring to FIG. 27, in the direction perpendicular to the axial direction, the first bent portion 340 of the first shield 300 is completely covered by the side walls 812 of the cover 810. A size of each of the side walls 812 may be formed to be greater than a size of the first bent portion 340 such that the side walls 812 completely cover the first bent portion 340 of the first shield 300 in the direction perpendicular to the axial direction.

Although not illustrated in the drawing, the second bent portion 440 of the second shield 400 is also completely covered by the side walls 812 of the cover 810 like the first shield 300.

As described above, since the cover 810 structurally surrounds an outer side of the first shield 300 or an outer side of the second shield 400, the first shield 300 or the second shield 400 may be prevented from being broken due to an external impact. In addition, as the cover 810 which protects the first shield 300 or the second shield 400 is provided on the housing 800, an additional structure for protecting the first shield 300 or the second shield 400 does not need to be provided, and thus a structure thereof is simple. In addition, the cover 810 is disposed to overlap the first shield 300 or the second shield 400 in not only the axial direction but also the direction perpendicular to the axial direction as described above to effectively protect the first shield 300 or the second shield 400 from an external impact.

As illustrated in FIGS. 23 to 25, since the first shield 300 and the second shield 400 are assembled through the one side opening O1 and the other side opening O2 provided in the cover 810, the first shield 300 and the second shield 400 are protected, and the first shield 300 or the second shield 400 is easily assembled to the housing 800.

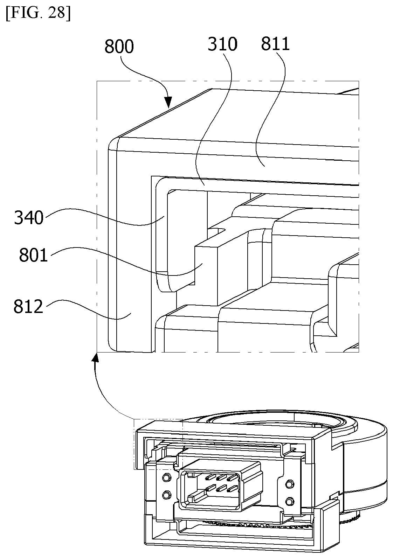

FIG. 28 is an enlarged view illustrating an inner portion of the cover 810 of the housing 800.

Referring to FIG. 28, the housing 800 may include a protrusion 801. The protrusion 801 protrudes from the outer surface of the housing 800 in the axial direction. The protrusion 801 is disposed to face the side wall 812 of the cover 810. The first bent portion 340 of the first shield 300 and the second bent portion 440 of the second shield 400 may be located between the side wall 812 and the protrusion 801.

The first shield 300 and the second shield 400 may be introduced into the inside of the cover 810 in the direction perpendicular to the axial direction and assembled to the housing 800. In this case, in a process of assembling the first shield 300 and the second shield 400, the side wall 812 and the protrusion 801 serve to align the first shield 300 or the second shield 400 to be assembled in the right location by guiding a location of the first bent portion 340 or the second bent portion 440.

The above-described embodiments may be used for various devices for vehicles, home appliances, and the like.

## Claims

1. A sensor device comprising:
a rotor;
a stator disposed to correspond to the rotor;
a first shield and a second shield each disposed at one side of the stator;
a first collector and a second collector disposed between the first shield and the second shield; and
a Hall sensor disposed between the first collector and the second collector,
wherein the first shield is disposed apart from the first collector and the second collector, and
the second shield is disposed apart from the first collector and the second collector.

2. The sensor device of claim 1, wherein:
the first shield includes a first region located at a first side of the stator in an axial direction, a second region disposed at a second side of the stator, and a third region which connects the first region and the second region; and
the second shield includes a fourth region located at the second side of the stator in the axial direction, a fifth region located at the first side of the stator, and a sixth region which connects the fourth region and the fifth region.

3. The sensor device of claim 2, wherein:
the second region is disposed to overlap the stator in the axial direction; and
the fourth region is disposed to overlap the stator in the axial direction.

4. The sensor device of claim 2, wherein:
the first shield includes a first bent portion bent from an end portion of the first region toward the second shield; and
the second shield includes a second bent portion bent from an end portion of the second region toward the first shield.

5. The sensor device of claim 1, wherein the first collector includes:
a first body;
a first leg bent from the first body toward the Hall sensor; and
a first extension disposed on the first body to overlap the stator in an axial direction,
wherein a shape of the first extension overlapping the stator in the axial direction is disposed to correspond to a shape of the fifth region, and
a size of the fifth region is greater than a size of the first extension to cover the first extension in the axial direction.

6. A sensor device comprising:
a rotor;
a stator disposed to correspond to the rotor;
a first shield and a second shield each disposed at one side of the stator;
a first collector and a second collector disposed between the first shield and the second shield;
a Hall sensor disposed between the first collector and the second collector; and
a housing disposed outside the stator,
wherein the first shield and the second shield are disposed outside the housing,
the first collector and the second collector are disposed inside the housing,
the housing includes a cover disposed outside the first shield and the second shield, and
a body of the cover is disposed to overlap the first shield in an axial direction and overlap the second shield in the axial direction.

7. The sensor device of claim 6, wherein:
the cover includes a side wall which connects the body and the housing; and
the side wall is disposed to overlap the first shield in a direction perpendicular to the axial direction and overlap the second shield in the direction perpendicular to the axial direction.

8. The sensor device of claim 7, wherein:
the first shield includes a first region located at a first side of the stator in the axial direction, a second region located at a second side of the stator, and a third region which connects the first region and the second region; and
the second shield includes a fourth region located at the second side of the stator in the axial direction, a fifth region located at the first side of the stator, and a sixth region which connects the fourth region and the fifth region.

9. The sensor device of claim 3, wherein the body is disposed to overlap the first region in the axial direction and overlap the fourth region in the axial direction.

10. The sensor device of claim 3, wherein:
the first shield includes a first bent portion bent from an end portion of the first region toward the second shield;
the second shield includes a second bent portion bent from an end portion of the second region toward the first shield; and
the body is disposed to overlap the first bent portion in the direction perpendicular to the axial direction and overlap the second bent portion in the direction perpendicular to the axial direction.
